# FASCICULE DE BREVET EUROPEEN

(11) **EP 3 470 251 B1**
(45) Date de publication et mention de la délivrance du brevet: **23.09.2020**
(21) Numéro de dépôt: 18194522.1
(22) Date de dépôt: 14.09.2018
(51) Int. Cl.: B60J 5/10, B60J 5/14, E05F 15/70, B60J 5/12

(54) **VÉHICULE ROUTIER DE TRANSPORT DE MARCHANDISES COMPRENANT UNE CARROSSERIE MUNIE D'UN RIDEAU DE FERMETURE, ET PROCÉDÉ DE PILOTAGE ASSOCIÉ**
STRASSENFAHRZEUG FÜR DEN TRANSPORT VON WAREN, DAS EINE MIT EINEM VERSCHLUSSVORHANG AUSGESTATTETE KAROSSERIE UMFASST, UND ENTSPRECHENDES LENKVERFAHREN
ROAD VEHICLE FOR TRANSPORTING GOODS COMPRISING A BODY PROVIDED WITH A CLOSING CURTAIN, AND DRIVING METHOD THEREOF

(30) Priorité: 11.10.2017 FR 1759508
(43) Date de publication de la demande: 17.04.2019
(73) Titulaire: Jean Chereau SAS, 50220 Ducey (FR)
(72) Inventeur: BUISINE, François, 35140 SAINT AUBIN DU CORMIER (FR); LEROUX, François, 50300 Saint Senier Sous Avranches (FR)
(74) Mandataire: Casalonga

(56) Documents cités:
- WO-A1-2006/072232
- NL-A- 9 000 459
- US-A- 6 085 825

## Description

La présente invention concerne le domaine des véhicules routiers de transport de marchandises, tels que des camions, des semi-remorques, des remorques ou des porteurs, comprenant une carrosserie, notamment une carrosserie frigorifique.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

L'espace de chargement intérieur d'une carrosserie frigorifique est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre un rideau coulissant et un moyen d'entrainement du rideau entre une position fermée et une position ouverte d'accès à l'espace de chargement intérieur. Le moyen d'entrainement peut par exemple être un moteur électrique ou encore un vérin pneumatique. On parle alors de rideau à ouverture électrique ou à ouverture électropneumatique. Pour plus de détail sur la conception d'un tel rideau de fermeture, on pourra par exemple se référer au brevet FR-B1-2 994 130. Le document WO 2006/072232 A1 divulgue un dispositif de fermeture comprenant une porte à deux battants articulés à rotation avec un dispositif de pilotage dans le cabine pour entraîner la porte.

Dans la pratique, il arrive fréquemment que le rideau de fermeture coulissant reste dans une position ouverte alors que le véhicule se déplace. Ceci peut par exemple se produire en cas d'oubli du conducteur lors d'un départ, ou lorsque le conducteur n'a pas accès au quai de chargement et ne peut donc pas atteindre l'interface de commande du rideau qui est généralement située sur un des montants du cadre arrière ou custode de la carrosserie. Ceci peut encore être le cas lors de manœuvres à l'intérieur du parc de véhicules routiers du livreur, par exemple pour aller à la station de lavage ou à la station de ravitaillement en carburant.

Or, de tels déplacements du véhicule avec le rideau de fermeture en position ouverte posent plusieurs problèmes. Par exemple, lors d'une tournée, la température de l'air à l'intérieur de l'espace de chargement de la carrosserie peut augmenter et ne pas être régulée correctement. La chaine du froid peut alors ne plus être respectée. En outre, il y a un risque de chutes des marchandises. Par ailleurs, les tringleries et autres composants mécaniques du rideau de fermeture ne sont pas conçus pour encaisser les chocs et les vibrations générés lors du roulage du véhicule qu'en position fermée du rideau. Un roulage en position ouverte peut provoquer une détérioration du rideau et de ses composants mécaniques.

La présente invention vise à remédier à ces inconvénients.

L'invention a pour objet un véhicule routier de transport de marchandises comprenant une carrosserie comprenant un espace de chargement intérieur et un dispositif de fermeture d'un accès audit espace de chargement intérieur comprenant un rideau de fermeture et un moyen d'entrainement dudit rideau entre une position ouverte et une position fermée.

Le véhicule comprend également au moins un moyen détecteur de position pour détecter la position ouverte ou fermée du rideau de fermeture, et au moins un moyen de détermination de la vitesse du véhicule.

Selon une caractéristique générale, le véhicule comprend encore une unité de commande électronique apte à émettre un signal de commande pour le passage automatique du rideau de fermeture dans la position fermée en présence d'un signal du moyen détecteur de position représentatif de la position ouverte dudit rideau de fermeture et lorsque la vitesse déterminée du véhicule est supérieure à un seuil prédéterminé.

Ainsi, la fermeture automatique du rideau est commandée lorsque le rideau est resté en position ouverte et dès que le véhicule dépasse le seuil de vitesse prédéterminée. On évite ainsi des déplacements du véhicule avec le rideau en position ouverte pour des vitesses susceptibles de provoquer une détérioration des composants du rideau, ou encore un risque de chute des marchandises transportées. En outre, cela permet d'assurer le respect de la chaine du froid lors des tournées.

Avantageusement, le véhicule comprend en outre au moins un moyen d'émission de signaux d'avertissement visibles et/ou audibles, l'unité de commande électronique étant apte à émettre en outre un signal d'activation dudit moyen d'émission des signaux d'avertissement en cas d'émission dudit signal de commande. La fermeture automatique du rideau est ainsi signalée à l'utilisateur du véhicule.

Dans un mode de réalisation particulier, le dispositif de fermeture comprend une unité de contrôle électronique pour le pilotage du moyen d'entrainement en vue du déplacement du rideau de fermeture qui est reliée à l'unité de commande électronique, ledit signal de commande émis par l'unité de commande électronique étant délivré à l'unité de contrôle électronique.

Dans ce mode de réalisation, l'unité de contrôle électronique est distincte de l'unité de commande. Ces deux unités peuvent être couplées ou reliées entre elles par une connexion ou liaison de données par exemple de type filaire ou radioélectrique ou encore par l'intermédiaire de bus de communication.

Avantageusement, les signaux émis par le moyen détecteur de position sont transmis à l'unité de contrôle électronique. L'unité de commande reçoit de l'unité de contrôle électronique du dispositif de fermeture les données relatives à la position ouverte ou fermée du rideau de fermeture qui est détectée par le moyen détecteur. Cela permet d'utiliser le moyen détecteur déjà existant qui est prévu pour le pilotage du déplacement du rideau de fermeture. Autrement dit, la fonction de fermeture automatique du rideau ne nécessite pas dans ce cas l'utilisation de moyen détecteur spécifique. En variante, indépendamment de la présence ou non de l'unité de contrôle électronique propre au dispositif de fermeture, il reste cependant possible de prévoir un moyen détecteur spécifique pour réaliser cette fonction de fermeture automatique du rideau. Dans ce cas, ce moyen détecteur spécifique est relié à l'unité de commande électronique.

Avantageusement, le véhicule comprend en outre un moyen de détection d'obstacle à la fermeture du rideau de fermeture, l'unité de contrôle électronique pilotant ledit passage automatique du rideau de fermeture dans la position fermée en fonction des signaux dudit moyen de détection d'obstacle. Ainsi, l'unité de contrôle peut stopper la fermeture automatique du rideau commandée par l'unité de commande en cas de détection d'un obstacle avant ou durant la descente du rideau.

Dans un autre mode de réalisation alternatif, le véhicule peut comprendre une unique unité pour le pilotage du déplacement du rideau de fermeture et la commande de la fermeture automatique.

Selon une conception particulière, le véhicule comprend en outre un système de freinage à commande électronique comprenant au moins un capteur de mesure de la vitesse de rotation des roues dudit véhicule, et une unité de contrôle électronique pour le pilotage de la pression de freinage appliqué aux roues en fonction des signaux émis par le capteur de mesure, ladite unité de contrôle électronique étant reliée à l'unité de commande électronique et le moyen de détermination de la vitesse du véhicule comprenant ledit capteur.

Avec une telle conception, les signaux émis par le ou les capteurs de mesure de la vitesse de rotation des roues sont de préférence transmis à l'unité de contrôle électronique du système de freinage. L'unité de commande reçoit de l'unité de contrôle électronique du système de freinage les données relatives à la vitesse de rotation des roues et/ou à la vitesse du véhicule. La vitesse du véhicule est déterminée, par l'unité de contrôle électronique du système de freinage ou encore par l'unité de commande, à partir de la vitesse de rotation des roues. Cela permet d'utiliser le ou les capteurs déjà existants qui sont déjà prévus pour l'assistance au freinage. En variante, indépendamment de la présence ou non du système de freinage, il reste cependant possible de prévoir un ou des capteurs prévus spécifiquement pour détecter la vitesse du véhicule. Dans ce cas, ce ou ces capteurs spécifiques sont reliés à l'unité de commande électronique.

L'invention concerne encore un procédé de pilotage d'un dispositif de fermeture d'un accès à l'espace de chargement intérieur d'une carrosserie de véhicule routier de transport de marchandises, le dispositif comprenant un rideau de fermeture et un moyen d'entrainement dudit rideau entre au moins une position ouverte et une position fermée. Le procédé comprend les étapes suivantes :
- détecter la position ouverte ou fermée du rideau de fermeture,
- comparer la vitesse du véhicule à un seuil prédéterminé lorsque le rideau de fermeture est en position ouverte, et
- commander la fermeture automatique du rideau de fermeture lorsque le véhicule routier se déplace à une vitesse supérieure audit seuil prédéterminé.

L'étape de détection de la position du rideau de fermeture est de préférence réalisée avant l'étape de comparaison de la vitesse du véhicule au seuil prédéterminé.

Dans un mode de mise en œuvre, le procédé peut comprendre l'étape : émettre des signaux d'avertissement visibles et/ou audibles en cas de fermeture automatique du rideau de fermeture.

Dans un mode de mise en œuvre particulier, le procédé comprend l'étape additionnelle : détecter la présence d'obstacle à la fermeture du rideau de fermeture, puis commander la fermeture automatique du rideau de fermeture lorsque le véhicule se déplace à une vitesse supérieure audit seuil prédéterminé et lorsqu'aucun obstacle n'est détecté. Cette étape additionnelle peut être réalisée après l'étape de comparaison de la vitesse du véhicule au seuil prédéterminé.

La présente invention sera mieux comprise à l'étude de la description détaillée d'un mode de réalisation pris à titre d'exemple nullement limitatif et illustré par les dessins annexés, sur lesquels :
- la figure 1 est une vue schématique en coupe longitudinale de l'intérieur d'un véhicule routier de transport de marchandises selon un exemple de réalisation de l'invention, et
- la figure 2 illustre schématiquement une unité de commande électronique du véhicule de la figure 1.

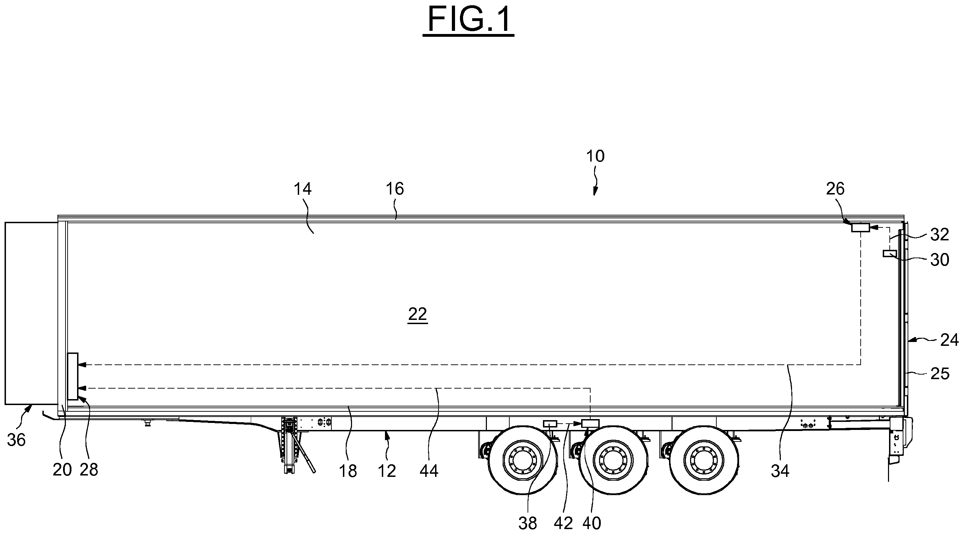

Sur la figure 1, on a représenté un véhicule comprenant une carrosserie 10 frigorifique et un châssis 12 porteur s'étendant longitudinalement et équipé de roues. La carrosserie 10 est montée sur le châssis 12.

La carrosserie 10 comprend deux flancs 14 verticaux opposés s'étendant longitudinalement, un plafond ou pavillon 16, un plancher 18, une face avant 20 et un cadre arrière nommé custode (non visible sur la figure) qui sont assemblés entre eux pour délimiter un espace de chargement 22 intérieur.

La carrosserie 10 comprend également un dispositif 24 de fermeture d'une ouverture ou accès arrière à l'espace de chargement 22. Le dispositif 24 de fermeture comprend un rideau de fermeture 25 coulissant et un moyen d'entrainement (non représenté) dudit rideau entre une position de fermeture de l'accès arrière et au moins une position d'ouverture. Le rideau de fermeture 25 comprend une pluralité de panneaux transversaux articulés entre eux et guidés latéralement dans des rails du cadre arrière de la carrosserie par l'intermédiaire de galets. Le moyen d'entrainement peut par exemple être un moteur électrique ou encore un vérin pneumatique. Le moyen d'entrainement peut être monté à l'intérieur d'une traverse supérieure du cadre arrière de la carrosserie.

Le dispositif 24 de fermeture comprend également une unité de contrôle 26 électronique pour le pilotage du déplacement du rideau de fermeture 25. L'unité de contrôle 26 peut par exemple être montée à proximité du moyen d'entrainement du rideau à l'intérieur de la traverse supérieure du cadre arrière de la carrosserie.

Comme cela sera décrit plus en détail par la suite, le véhicule comprend également une unité de commande 28 électronique permettant la fermeture automatique du rideau de fermeture 25 lorsque celui-ci est resté en position d'ouverture et lorsque le véhicule se déplace à une vitesse supérieure à un seuil prédéterminé.

Le véhicule comprend également un moyen détecteur de position 30 pour détecter une position ouverte ou une position fermée du rideau de fermeture 25. Le moyen détecteur de position 30 peut par exemple comprendre deux capteurs magnétiques fixés sur un des flancs 14 de la carrosserie. Chaque capteur magnétique sert de capteur de fin de course et permet la détection de la position ouverte ou fermée du rideau de fermeture 25 grâce à la présence d'aimants disposés sur les panneaux du rideau. Alternativement, il est possible de prévoir d'autres types de moyens détecteurs de position, par exemple un contacteur fixé sur le rideau de fermeture pour assurer une continuité électrique uniquement lorsque le rideau est dans la position fermée. Le moyen détecteur de position 30 est relié à l'unité de contrôle 26 du dispositif de fermeture par l'intermédiaire d'une connexion 32 illustrée schématiquement en pointillés. La connexion 32 peut par exemple être de type filaire ou radioélectrique ou encore être réalisée par l'intermédiaire de bus de communication. Les signaux de position émis par le moyen détecteur de position 30 et transmis à l'unité de contrôle 26 sont représentatifs de la position ouverte ou fermée du rideau de fermeture 25.

L'unité de contrôle 26 délivre à l'unité de commande 28 l'information relative à la position ouverte ou fermée du rideau de fermeture obtenue via le moyen détecteur de position 30. L'unité de contrôle 26 est reliée à l'unité de commande 28 par l'intermédiaire d'une connexion 34 illustrée schématiquement en pointillés. La connexion 34 peut par exemple être de type filaire ou radioélectrique ou encore être réalisée par l'intermédiaire de bus de communication.

Le véhicule comprend également un moyen de détection d'obstacle (non représenté) à la fermeture du rideau de fermeture 25 apte à détecter les obstacles pouvant bloquer le mouvement de descente du rideau. Le moyen de détection d'obstacle peut par exemple comprendre un capteur photoélectrique équipé d'un émetteur d'un faisceau lumineux et d'un récepteur dudit faisceau qui sont fixés sur des montants latéraux du cadre arrière de la carrosserie. La détection d'un obstacle s'effectue par coupure du faisceau lumineux. Le moyen de détection d'obstacle est relié à l'unité de contrôle 26 du dispositif de fermeture pour le pilotage du rideau 25.

La carrosserie 10 comprend un groupe ou machine frigorifique 36 pour envoyer de l'air à température régulée à l'intérieur de l'espace de chargement 22. De manière connue en soi, l'air peut être extrait de l'espace de chargement 22 par la machine frigorifique 36 et, après mise à température, être réinjecté dans cet espace. La machine frigorifique 36 est fixée ici sur la face avant 20 de la carrosserie à l'extérieur de l'espace de chargement 22. En variante, il est possible de monter la machine frigorifique 36 sur une des autres parois de la carrosserie 10, par exemple sur le pavillon 16 ou sur le plancher 18. La machine frigorifique 36 peut par exemple être une machine frigorifique à moteur thermique, une machine frigorifique à moteur électrique, une machine frigorifique hybride ou encore une machine frigorifique fonctionnant sur le principe de la cryogénie, par exemple à l'azote ou au dioxyde de carbone.

Le véhicule comprend encore un capteur 38 de mesure de la vitesse de rotation des roues du châssis 12. Les signaux émis par le capteur 38 sont représentatifs de la vitesse du véhicule. Un unique capteur de vitesse est ici prévu. Alternativement, il est possible de prévoir un nombre supérieur de capteurs de vitesse, par exemple quatre. Le capteur 38 est fixé sur le châssis 12. En variante, le capteur 38 peut être fixé sur un des essieux des roues. Alternativement, il est possible de prévoir le montage d'un capteur de vitesse à la sortie de la boite de vitesses. Dans une autre variante, il est encore possible de prévoir d'autres moyens pour déterminer la vitesse du véhicule, par exemple un système GPS.

Dans l'exemple de réalisation illustré, le véhicule comprend encore un système de freinage 40 à commande électronique qui est fixé sur le châssis 12. De manière connue en soi, le système de freinage 40 comprend une unité de contrôle électronique (non représentée), des capteurs de mesure (non représentés) de la pression des coussins d'un système de suspension pneumatique des roues et de la pression de freinage, et au moins un capteur de mesure de la vitesse de rotation des roues, en l'espèce le capteur 38. Le capteur 38 est relié à l'unité de contrôle électronique du système de freinage 40 par l'intermédiaire d'une connexion 42 illustrée schématiquement en pointillés. La connexion 42 peut par exemple être de type filaire ou radioélectrique ou encore être réalisée par l'intermédiaire de bus de communication. En fonction des signaux reçus de ces capteurs de pression et de mesure de la vitesse, l'unité de contrôle électronique pilote des électrovalves pneumatiques (non représentées) qui régulent la pression de freinage appliquée pour les roues.

L'unité de contrôle électronique du système de freinage 40 est reliée à l'unité de commande 28 par l'intermédiaire d'une connexion 44 illustrée schématiquement en pointillés. La connexion 44 peut par exemple être de type filaire ou radioélectrique ou encore être réalisée par l'intermédiaire de bus de communication. L'unité de contrôle électronique du système de freinage 40 délivre à l'unité de commande 28 l'information relative à la vitesse du véhicule obtenue via le capteur 36.

Dans l'exemple de réalisation illustré, l'unité de commande 28 est fixée sur la face avant 20 de la carrosserie du côté de l'espace de chargement 22. Alternativement, d'autres montages de l'unité de commande 28 sont possibles. Cette unité pourrait par exemple être encastrée dans le plancher 18 de la carrosserie. L'unité de commande 28 peut se présenter sous la forme d'une carte de circuit imprimé.

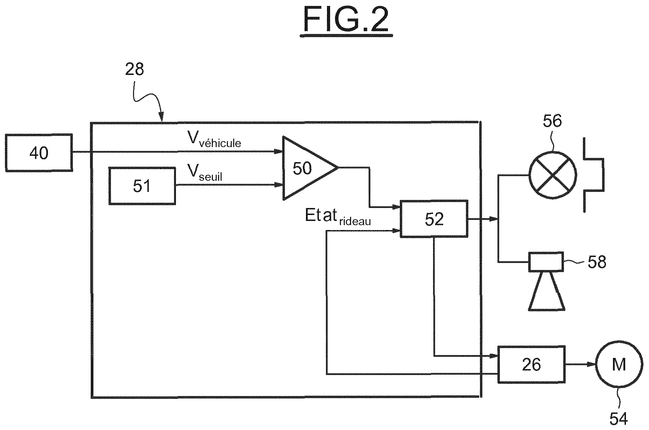

Comme cela est illustré à la figure 2, l'unité de commande 28 électronique comprend un comparateur 50 recevant sur une première entrée la vitesse du véhicule V_{véhicule} obtenue par l'intermédiaire du capteur de mesure de la vitesse de rotation des roues du véhicule, et sur une seconde entrée la valeur d'une vitesse seuil Vₛₑᵤᵢₗ prédéterminée. Comme indiqué précédemment, l'information relative à la vitesse du véhicule V_{véhicule} est délivrée par l'unité de contrôle électronique du système de freinage 40. La valeur seuil Vₛₑᵤᵢₗ peut quant à elle être issue de moyens de mémorisation 51 de l'unité de commande 28, tels qu'une mémoire non volatile. A titre indicatif, la valeur de la vitesse seuil Vₛₑᵤᵢₗ prédéterminée peut être fixée à 10 km/h. Il est possible de prévoir une valeur différente de vitesse seuil, bien entendu non nulle aussi. Le comparateur 50 émet sur sa sortie un « 1 » logique si la vitesse du véhicule V_{véhicule} est supérieure à la vitesse seuil Vₛₑᵤᵢₗ prédéterminée.

L'unité de commande 28 électronique comprend un circuit de commande 52 recevant en entrée le signal de sortie du comparateur 50, et l'information relative à l'état ouvert ou fermé du rideau de fermeture de la carrosserie. Comme indiqué précédemment, cette information relative à l'état du rideau de fermeture est délivrée par l'unité de contrôle 26.

Le circuit de commande 52 de l'unité comprend les moyens matériels et logiciels pour commander la fermeture automatique du rideau de fermeture lorsque le rideau est en position ouverte et la vitesse du véhicule V_{véhicule} est supérieure à la vitesse seuil Vₛₑᵤᵢₗ. Dans ce but, une loi de commande est mémorisée ou élaborée dans le circuit de commande 52, par exemple sous la forme d'un logiciel programmé.

Lorsque le rideau est en position ouverte et la vitesse du véhicule V_{véhicule} est supérieure à la vitesse seuil Vₛₑᵤᵢₗ, le circuit de commande 52 émet un signal de commande qui est délivré, par l'intermédiaire de la connexion 34 (figure 1), à l'unité de contrôle 26 pour piloter la fermeture du rideau. A partir de ce signal de commande, l'unité de contrôle 26 commande ensuite le fonctionnement du moyen d'entraînement 54 du rideau pour obtenir sa fermeture automatique.

Parallèlement à l'émission du signal de commande pour obtenir le passage automatique en position fermée du rideau de fermeture, le circuit de commande 52 émet un signal d'activation pour le déclenchement d'au moins un moyen d'émission de signaux d'avertissement visibles et/ou audibles pour alerter l'utilisateur du véhicule de la fermeture automatique du rideau de fermeture. Le moyen d'émission peut par exemple être le plafonnier électrique 56 de la carrosserie 10 prévu pour l'éclairage de l'espace de chargement 22 qui dans ce cas peut par exemple être commandé par l'unité de commande 26 pour scintiller, et/ou un buzzer ou alarme 58 prévue spécifiquement à l'intérieur de l'espace de chargement 22, et/ou un voyant d'alarme situé au niveau du tableau de bord du véhicule, etc.

Dans l'exemple de réalisation décrit, l'unité de commande 28 électronique permet donc de déclencher l'émission de signaux d'avertissement en cas de fermeture automatique commandée du rideau 25. En variante, il est possible de ne pas prévoir le déclenchement de signaux d'alarme dans ce cas.

Dans l'exemple de réalisation illustré, le dispositif de fermeture de la carrosserie permet d'ouvrir ou de fermer un accès arrière à l'espace de chargement intérieur. Alternativement ou en combinaison, il est possible de prévoir un dispositif de fermeture permettant d'ouvrir ou de fermer un accès latéral à l'espace de chargement intérieur prévu au niveau d'un des flancs longitudinaux de la carrosserie.

## Revendications

1. Véhicule routier de transport de marchandises comprenant :
- une carrosserie (10) comprenant un espace de chargement (22) intérieur et un dispositif de fermeture (24) d'un accès audit espace de chargement intérieur comprenant un rideau de fermeture (25) et un moyen d'entrainement dudit rideau entre au moins une position ouverte et une position fermée,
- au moins un moyen détecteur de position (30) pour détecter la position ouverte ou fermée du rideau de fermeture (25),
- au moins un moyen de détermination (38) de la vitesse du véhicule, et
- une unité de commande (28) électronique apte à émettre un signal de commande pour le passage automatique du rideau de fermeture (25) dans la position fermée en présence d'un signal du moyen détecteur de position (30) représentatif de la position ouverte dudit rideau de fermeture et lorsque la vitesse déterminée du véhicule est supérieure à un seuil prédéterminé non nul.

2. Véhicule selon la revendication 1, comprenant en outre au moins un moyen d'émission (56, 58) de signaux d'avertissement visibles et/ou audibles, l'unité de commande (28) électronique étant apte à émettre en outre un signal d'activation dudit moyen d'émission des signaux d'avertissement en cas d'émission dudit signal de commande.

3. Véhicule selon la revendication 1 ou 2, dans lequel le dispositif de fermeture (24) comprend une unité de contrôle électronique (26) pour le pilotage du déplacement du rideau de fermeture (25) qui est reliée à l'unité de commande (28) électronique, ledit signal de commande émis par l'unité de commande (28) électronique étant délivré à l'unité de contrôle électronique (26).

4. Véhicule selon la revendication 3, dans lequel les signaux émis par le moyen détecteur de position (30) sont transmis à l'unité de contrôle électronique (26).

5. Véhicule selon la revendication 3 ou 4, comprenant en outre un moyen de détection d'obstacle à la fermeture du rideau de fermeture (25), l'unité de contrôle électronique (26) pilotant ledit passage automatique du rideau de fermeture (25) dans la position fermée en fonction des signaux dudit moyen de détection d'obstacle.

6. Véhicule selon l'une quelconque des revendications précédentes, comprenant en outre un système de freinage (34) à commande électronique comprenant au moins un capteur (38) de mesure de la vitesse de rotation des roues dudit véhicule, et une unité de contrôle électronique pour le pilotage de la pression de freinage appliqué aux roues en fonction des signaux émis par le capteur (38) de mesure, ladite unité de contrôle électronique étant reliée à l'unité de commande (28) électronique et le moyen de détermination de la vitesse du véhicule comprenant ledit capteur (38).

7. Procédé de pilotage d'un dispositif de fermeture d'un accès à l'espace de chargement intérieur d'une carrosserie de véhicule routier de transport de marchandises, le dispositif comprenant un rideau de fermeture et un moyen d'entrainement dudit rideau entre une position ouverte et une position fermée, le procédé comprenant les étapes suivantes :
- détecter la position ouverte ou fermée du rideau de fermeture,
- comparer la vitesse du véhicule à un seuil prédéterminé lorsque le rideau de fermeture est en position ouverte, et
- commander la fermeture automatique du rideau de fermeture lorsque le véhicule se déplace à une vitesse supérieure audit seuil prédéterminé.

8. Procédé selon la revendication 7, comprenant l'étape : émettre des signaux d'avertissement visibles et/ou audibles en cas de fermeture automatique du rideau de fermeture.

9. Procédé selon la revendication 7 ou 8, comprenant l'étape additionnelle : détecter la présence d'obstacle à la fermeture du rideau de fermeture, puis commander la fermeture automatique du rideau de fermeture lorsque le véhicule se déplace à une vitesse supérieure audit seuil prédéterminé et lorsqu'aucun obstacle n'est détecté.

## Patentansprüche

1. Straßenfahrzeug für den Transport von Waren, Folgendes umfassend:
- eine Karosserie (10), umfassend einen inneren Laderaum (22) und eine Schließvorrichtung (24) eines Zugangs zu dem inneren Laderaum umfassend einen Schließvorhang (25) und ein Antriebsmittel des Vorhangs zwischen wenigstens einer geöffneten Position und einer geschlossenen Position,
- wenigstens ein Positions-Detektionsmittel (30) zum Detektieren der geöffneten oder geschlossenen Position des Schließvorhangs (25),
- wenigstens ein Bestimmungsmittel (38) der Geschwindigkeit des Fahrzeugs, und
- eine elektronische Anforderungseinheit (28), fähig, ein Anforderungssignal zu emittieren für den automatischen Übergang des Schließvorhangs (25) in die geschlossene Position bei Vorhandensein eines Signals des Positions-Detektionsmittels (30) repräsentativ für die geöffnete Position des Schließvorhangs und wenn die bestimmte Geschwindigkeit des Fahrzeugs über einer vorher festgelegten Schwelle ungleich null liegt.

2. Fahrzeug nach Anspruch 1, weiter umfassend wenigstens ein Emissionsmittel (56, 58) von sichtbaren und/oder hörbaren Warnsignalen, wobei die elektrische Anforderungseinheit (28) fähig ist, bei einer Emission des Anforderungssignals weiter ein Aktivierungssignal des Emissionsmittels von Warnsignalen zu emittieren.

3. Fahrzeug nach Anspruch 1 oder 2, in welchem die Schließvorrichtung (24) eine elektronische Kontrolleinheit (26) umfasst für die Anforderung der Bewegung des Schließvorhangs (25), die mit der elektronischen Anforderungseinheit (28) verbunden ist, wobei das von der elektronischen Anforderungseinheit (28) emittierte Anforderungssignal an die elektronische Kontrolleinheit (26) geliefert wird.

4. Fahrzeug nach Anspruch 3, in welchem die von dem Positions-Detektionsmittel (30) emittierten Signale an die elektronische Kontrolleinheit (26) übertragen werden.

5. Fahrzeug nach Anspruch 3 oder 4, weiter umfassend ein Mittel zur Hindernisdetektion beim Schließen des Schließvorhangs (25), wobei die elektronische Kontrolleinheit (26) den automatischen Übergang des Schließvorhangs (25) in die geschlossene Position gemäß den Signalen des Hindernis-Detektionsmittels anfordert.

6. Fahrzeug nach einem der vorhergehenden Ansprüche, weiter umfassend ein Bremssystem (34) mit elektronischer Anforderung, umfassend wenigstens einen Mess-Sensor (38) der Rotationsgeschwindigkeit der Räder des Fahrzeugs und eine elektronische Kontrolleinheit für die Anforderung des auf die Räder ausgeübten Bremsdrucks in gemäß der von dem Mess-Sensor (38) emittierten Signale, wobei die elektronische Kontrolleinheit mit der elektronischen Anforderungseinheit (28) verbunden ist und das Bestimmungsmittel der Geschwindigkeit des Fahrzeugs den Sensor (38) umfasst.

7. Verfahren zum Anfordern einer Schließvorrichtung eines Zugangs zu dem inneren Laderaum einer Karosserie eines Straßenfahrzeugs zum Transport von Waren, wobei die Vorrichtung einen Schließvorhang und ein Antriebsmittel des Vorhangs zwischen einer geöffneten Position und einer geschlossenen Position umfasst, wobei das Verfahren die folgenden Schritte umfasst:
- Detektieren der geöffneten oder geschlossenen Position des Schließvorhangs,
- Vergleichen der Geschwindigkeit des Fahrzeugs mit einer vorher festgelegten Schwelle, wenn sich der Schließvorhang in einer geöffneten Position befindet, und
- Anfordern des automatischen Schließens des Schließvorhangs, wenn sich das Fahrzeug bei einer Geschwindigkeit oberhalb der vorher festgelegten Schwelle bewegt.

8. Verfahren nach Anspruch 7, umfassend den folgenden Schritt: Aussenden von sichtbaren und/oder hörbaren Warnsignalen bei automatischem Schließen des Schließvorhangs.

9. Verfahren nach Anspruch 7 oder 8, umfassend den zusätzlichen Schritt: Detektieren des Vorhandenseins eines Hindernisses beim Schließen des Schließvorhangs, dann Anfordern des automatischen Schließens des Schließvorhangs, wenn sich das Fahrzeugs bei einer Geschwindigkeit oberhalb der vorher festgelegten Schwelle bewegt und wenn kein Hindernis detektiert wird.

## Claims

1. Road vehicle for transporting merchandise comprising:
- a body (10) comprising an inner loading space (22) and a device (24) for closing an access to said inner loading space comprising a closing curtain (25) and a means for driving said curtain between at least an open position and a closed position,
- at least one position-detecting means (30) for detecting the open or closed position of the closing curtain (25),
- at least one means (38) for determining the speed of the vehicle, and
- an electronic control unit (28) capable of emitting a control signal for the automatic passage of the closing curtain (25) into the closed position in the presence of a signal from the position-detecting means (30) representative of the open position of said closing curtain and when the determined speed of the vehicle is greater than a non-zero predetermined threshold.

2. Vehicle according to claim 1, further comprising at least one means (56, 58) for emitting visible and/or audible warning signals, the electronic control unit (28) being capable of further emitting a signal for activation of said means for emitting the warning signals in the case of emission of said control signal.

3. Vehicle according to claim 1 or 2, wherein the closing device (24) comprises an electronic control unit (26) for controlling the movement of the closing curtain (25) that is connected to the electronic control unit (28), said control signal emitted by the electronic control unit (28) being delivered to the electronic control unit (26).

4. Vehicle according to claim 3, wherein the signals emitted by the position-detecting means (30) are transmitted to the electronic control unit (26).

5. Vehicle according to claim 3 or 4, further comprising a means for detecting an obstacle to the closing of the closing curtain (25), the electronic control unit (26) controlling said automatic passage of the closing curtain (25) into the closed position according to the signals of said obstacle-detecting means.

6. Vehicle according to any one of the previous claims, further comprising an electronically controlled braking system (34) comprising at least one sensor (38) for measuring the speed of rotation of the wheels of said vehicle, and an electronic control unit for controlling the braking pressure applied to the wheels according to the signals emitted by the measurement sensor (38), said electronic control unit being connected to the electronic control unit (28) and the means for determining the speed of the vehicle comprising said sensor (38).

7. Method for controlling a device for closing an access to the inner loading space of a body of a road vehicle for transporting merchandise, the device comprising a closing curtain and a means for driving said curtain between an open position and a closed position, the method comprising the following steps:
- detecting the open or closed position of the closing curtain,
- comparing the speed of the vehicle to a predetermined threshold when the closing curtain is in an open position, and,
- controlling the automatic closing of the closing curtain when the vehicle is moving at a speed greater than said predetermined threshold.

8. Method according to claim 7, comprising the step of: emitting visible and/or audible warning signals in the case of automatic closing of the closing curtain.

9. Method according to claim 7 or 8, comprising the additional step of: detecting the presence of an obstacle to the closing of the closing curtain, then controlling the automatic closing of the closing curtain when the vehicle moves at a speed greater than said predetermined threshold and when no obstacle is detected.
